# FASCICULE DE BREVET EUROPEEN

(11) **EP 1 656 989 B1**
(45) Date de publication et mention de la délivrance du brevet: **11.01.2012**
(21) Numéro de dépôt: 05292304.2
(22) Date de dépôt: 28.10.2005
(51) Int. Cl.: B01J 8/24, B01J 8/26, C10G 11/05, C10G 11/18, C10G 51/00

(54) **Dispositif et procédé pour le craquage catalytique de deux charges distinctes d'hydrocarbures**
Einrichtung und Verfahren zur katalytischen Spaltung von zwei unterschiedlichen Kohlenwasserstoffeinsätzen
Device and process for the catalytic cracking of two distinct hydrocarbon feeds

(30) Priorité: 09.11.2004 FR 0411956
(43) Date de publication de la demande: 17.05.2006
(73) Titulaire: Institut Français du Pétrole, 92852 Rueil Malmaison Cedex (FR)
(72) Inventeur: Andreux, Régis, 69340 Francheville (FR); Duplan, Jean-Luc, 69540 Irigny (FR)

(56) Documents cités:
- EP-A- 1 413 622
- WO-A-01/85872
- US-A- 3 440 020
- US-A- 4 417 974
- US-A- 5 114 700
- US-A- 5 194 227
- US-B1- 6 296 812
- US-B1- 6 616 899

## Description

La présente invention se rapporte à un dispositif et un procédé associé utiles pour les processus de craquage catalytique de coupes pétrolières en phase transportée ou lit fluidisé, généralement décrit dans le métier par le terme anglo-saxon Fluid Catalytic Cracking ou FCC. Les charges traitées peuvent être par exemple des distillats et/ou des résidus hydrotraités comme les résidus de distillation atmosphérique ou de distillation sous vide, voire les résidus de viscoréduction.
Plus particulièrement, le domaine de l'invention comprend le craquage, au cours d'un processus de FCC, de coupes pétrolières dans une unité permettant le craquage conjoint de deux charges de nature différente, appelées dans la suite de la description charge conventionnelle et charge secondaire. Dans la suite de la description, par le terme charge conventionnelle on désigne une coupe pétrolière conventionnelle, c'est à dire habituellement traité au sein de la raffinerie par une unité FCC ; par le terme charge secondaire on désigne une coupe pétrolière secondaire.

Une unité de FCC comprend habituellement une zone réactionnelle de craquage de la charge conventionnelle. Cette zone comprend le plus souvent un tube vertical, couramment nommé selon le terme anglo-saxon riser, dans lequel l'écoulement gaz-solide est généralement ascendant. En général l'unité FCC comprend en outre une zone de séparation des produits gazeux et du catalyseur solide, une zone de stripage et une zone de régénération dans laquelle le coke produit au cours du craquage et déposé sur le catalyseur solide est brûlé. Dans certains modes de réalisation de ce type d'unité il est quelquefois décrit en plus de la zone réactionnelle principale une zone réactionnelle secondaire pour le craquage d'une deuxième coupe pétrolière.
L'objectif de cette disposition particulière est de créer dans cette zone réactionnelle secondaire des conditions de craquage plus sévères, c'est à dire par exemple des températures de réaction et/ou des rapport du débit de catalyseur sur débit de charge supérieurs. Une telle disposition présente l'avantage de pouvoir traiter au sein d'une même unité des charges de nature différente et dont les conditions optimales de craquage ne sont pas les mêmes.

Selon un premier mode de réalisation, certaines publications décrivent l'implantation d'un tube délimitant une zone secondaire et positionné dans la zone réactionnelle conventionnelle, le riser principal délimitant la zone réactionnelle conventionnelle et le tube délimitant la zone réactionnelle secondaire de craquage (ou riser secondaire) étant dans des positions coaxiales, concentriques et parallèles.

Par exemple, le principe d'un craquage d'une coupe pétrolière dans un riser secondaire au sein d'une unité FCC est décrit dans le brevet US 3,440,020. La zone réactionnelle conventionnelle et la zone réactionnelle secondaire sont constituées de deux tubes coaxiaux, et le riser secondaire est interne au riser conventionnel. La sortie du riser secondaire est au-dessus de la sortie du riser principal. L'entrée du riser secondaire est positionnée dans la région basse du riser principal. Deux coupes pétrolières différentes peuvent être converties isolément l'une de l'autre, dans des conditions différentes de craquage.

Le brevet US 4,417,974 décrit l'implantation d'une zone réactionnelle secondaire au sein de l'unité de FCC, dans une configuration similaire au cas précédent, mais dont la sortie est au-dessous de la sortie du riser principal. Les produits de la réaction secondaire et le catalyseur acteur de cette réaction sont donc mélangés aux réactifs de la réaction conventionnelle et transportés avec ceux-ci jusqu'au sommet du riser principal. La charge conventionnelle est à fort pouvoir désactivant du catalyseur. La charge secondaire est à faible pouvoir désactivant du catalyseur.

Le brevet EP 1,413,622 décrit la mise en place à l'intérieur de la partie inférieure du riser d'une unité de FCC d'une zone tubulaire sensiblement coaxiale afin d'effectuer un second craquage d'une charge spécifique dans des conditions plus sévères que celles du craquage d'une charge conventionelle dans la zone annulaire définie entre la zone tubulaire et la paroi du riser.

L'intérêt présenté par cette disposition dans laquelle les zones principales et secondaires sont délimitées par des tubes concentriques est de pouvoir utiliser en sortie du riser secondaire des particules de catalyseur faiblement coké lors du craquage de la charge secondaire pour réaliser un deuxième craquage de la charge conventionnelle dans la partie supérieure du riser principal ou du réacteur. La faiblesse de cette configuration en tube interne apparaît lorsque l'encombrement disponible dans l'unité est faible c'est à dire par exemple sur des unités dont le diamètre de la zone réactionnelle est faible.
Dans ce cas,
- (i) la présence de l'interne perturbe l'hydrodynamique de la zone réactionnelle du riser principal et a un impact non négligeable sur le craquage de la charge conventionnelle; par exemple, la modification induite des temps de séjour des réactifs ou l'augmentation résultante des phénomènes de rétromélange a pour conséquence une modification significative des rendements en les différents réactifs, et/ou une baisse de sélectivité de la réaction vis à vis des produits valorisables en sortie de réacteur.
- (ii) les contraintes mécaniques et l'érosion auxquelles le riser secondaire est soumis sont importantes, en raison de la proximité des injecteurs de la charge conventionnelle.

Selon un autre mode de réalisation, le tube délimitant la zone secondaire est parallèle mais non coaxial au tube principal mais positionné en dehors de celui ci, les entrées et sorties de la zone réactionnelle secondaire étant alors isolées de celles de la zone réactionnelle principale. Par exemple, la demande de brevet US 2003/044327 propose une zone réactionnelle secondaire isolée et indépendante, externe et semblable à la zone réactionnelle conventionnelle. Le principe de l'injection du catalyseur et de la coupe pétrolière dans chaque zone réactionnelle est identique. Le catalyseur coké et les produits de réaction provenant des deux zones réactionnelles sont mélangés dans la zone diluée de la zone de stripage. Les conditions de craquage de chaque zone réactionnelle sont ajustées indépendamment.

Selon un autre exemple, le brevet US 6,287,522 décrit un système de double riser similaire à celui décrit précédemment, mais les produits de chaque réaction ne sont pas mélangés dans la zone diluée de la zone de stripage. Un cyclone connecté directement en tête du tube site de la réaction secondaire permet la séparation du catalyseur et des produits de la réaction secondaire en isolant ces derniers des produits de la réaction conventionnelle.

L'intérêt présenté par une localisation du riser secondaire externe au riser principal est l'indépendance complète des conditions de craquage imposées dans les deux zones. Ceci permet de traiter dans des conditions prédéterminées et optimales les charges conventionnelle et secondaire. L'inconvénient d'une telle configuration est cependant l'absence d'utilisation du catalyseur encore actif en sortie du riser secondaire.

Selon la présente invention, un dispositif ainsi qu'un procédé associé sont proposés, qui permettent de combiner les avantages des configurations connues de l'art antérieur et tels que précédemment exposées, tout en s'affranchissant des inconvénients décrits pour chacune de celles-ci.

Ainsi l'invention permet d'une part de traiter une charge conventionnelle et une charge secondaire dans la même unité, dans des conditions particulières de craquage pour chacune de celles-ci et permet une utilisation optimisée du catalyseur, notamment en sortie du riser secondaire.

Dans sa forme la plus générale, l'invention concerne un dispositif pour le craquage catalytique d'une charge conventionnelle et d'une charge secondaire comprenant
- un riser principal **(B)** délimitant une zone réactionnelle conventionnelle,
- une conduite de transfert **A** vers le riser principal **B** amenant du catalyseur frais ou issu d'une unité de régénération,
- des moyens d'injection de la charge conventionnelle dans le riser principal **B,**
- des moyens d'injection d'une vapeur d'atomisation dans le riser principal **B,**
ledit dispositif comprenant en outre
- au moins deux risers secondaires (C) parallèles au riser principal (B), les angles entre deux risers secondaires adjacents par rapport au riser principal étant sensiblement égaux, l'extrémité inférieure de chaque riser secondaire est ouverte sur la partie basse du riser principal (B) et l'extrémité supérieure de chaque riser secondaire est ouverte sur la partie haute du riser principal (B), ou bien entre 2 et 10 de tels risers secondaires, ces riser(s) secondaire(s) étant disposé(s) autour du riser principal (B) et délimitant une zone réactionnelle secondaire pour le craquage de la charge secondaire.
- des moyens d'injection d'une charge secondaire dans le ou lesdits risers secondaires **C,**
- des moyens de contrôle des conditions de craquage de la charge secondaire.

Selon un mode possible, le dispositif comprend au moins deux risers secondaires parallèles au riser principal **B,** les angles entre deux risers secondaires adjacents par rapport au riser principal étant sensiblement égaux.

Par exemple, les moyens de contrôle des conditions de craquage de la charge secondaire peuvent comprendre des moyens d'injection d'un liquide de refroidissement dans la partie supérieure du riser principal **B.**

Le plus souvent, le ou les points de liaison entre les zones réactionnelles conventionnelle et secondaires sont positionnés en dessous du point d'injection de la charge conventionnelle dans le riser **B.**

Selon un mode possible de réalisation, le point d'injection de la charge conventionnelle dans le riser **B** peut être situé en dessous ou de préférence au dessus du point de liaison de la conduite de transfert de catalyseur A et du riser principal **B.**

De préférence, le ou les points de liaison entre les zones réactionnelles conventionnelle et secondaires sont situés au dessus et à proximité du point d'injection du catalyseur dans le riser **B,** c'est à dire de l'extrémité de la conduite **A.**

Selon un mode possible de réalisation, les moyens de contrôle des conditions du craquage secondaire comprennent en outre au moins une vanne de réglage du débit de catalyseur solide sur le riser secondaire.

La présente invention concerne également le procédé de mise en oeuvre du dispositif précédemment décrit.

En général, les conditions de craquage dans la zone réactionnelle secondaire et/ou dans la zone réactionnelle conventionnelle sont réglées au moins en partie par la vaporisation d'une quantité variable de liquide de refroidissement injectée par des moyens d'injection dudit liquide dans la partie supérieure du riser principal **B.**

Avantageusement, la longueur et le diamètre du riser secondaire sont choisis de façon à obtenir un temps de séjour moyen des composés compris entre environ 0,1 et environ 10 secondes.

Le plus souvent, la température de la zone réactionnelle secondaire est comprise entre 560 et 620°C et dans lequel le rapport C/O du débit de catalyseur sur le débit de la charge secondaire est compris entre environ 2 et environ 100.

La charge conventionnelle susceptible d'être traitée par le présent dispositif peut comprendre des distillats et/ou des résidus hydrotraités comme les résidus de distillation atmosphérique ou de distillation sous vide les résidus de viscoréduction de distillation .

La charge secondaire susceptible d'être traitée par le présent dispositif peut comprendre une charge d'hydrocarbures dont la masse molaire est comprise entre 65 g/mol et 285 g/mol.

Avantageusement, un catalyseur comprenant une zéolithe Y de type Faujasite et 2 à 10 % poids d'une zéolithe ZSM 5 peut être mise en oeuvre pour le craquage de la charge conventionnelle et/ou pour le craquage de la charge secondaire.

Selon un mode avantageux de réalisation de l'invention, un dispositif de séparation rapide comprenant une pluralité de chambres de séparation et de chambres de circulation ou strippage des fluides ou une pluralité de chambres dédiées successivement à la séparation et au strippage des fluides est utilisé pour la séparation des particules solides catalytiques et des produits gazeux issus de la réaction de craquage.

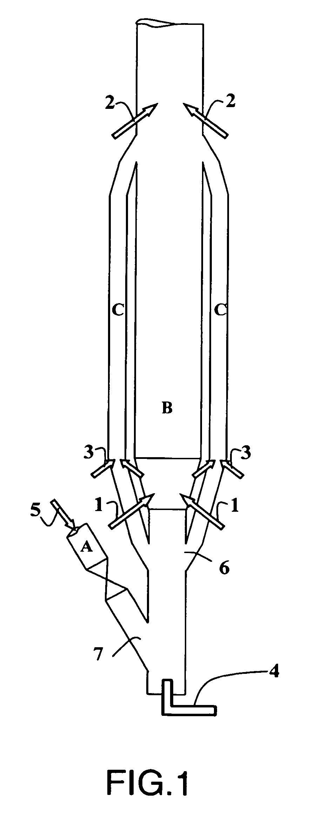

L'invention sera mieux comprise à la lecture de la description qui suit d'un mode de réalisation de l'invention, illustré en relation avec la figure 1 et donné à titre purement illustratif, c'est à dire ne restreignant sous aucun des aspects décrits l'étendue de la présente invention.

La présente invention peut par exemple et avantageusement être mise en oeuvre à l'occasion d'une modernisation d'une unité FCC fonctionnant selon une mise en oeuvre conventionnelle, c'est à dire avec un riser unique et en mode ascendant des fluides. Avant implantation d'une zone réactionnelle secondaire selon l'invention, l'unité comprend :
- un riser principal **B** délimitant la zone réactionnelle conventionnelle,
- une conduite de transfert **A** vers le riser **B** amenant le catalyseur issu d'une ligne 5 de sortie d'une unité de régénération du catalyseur (non représentée sur la figure 1),
- des moyens d'injection 1 de la charge conventionnelle dans le riser **B,** en mélange avec de la vapeur d'atomisation,
- éventuellement des moyens d'injection additionnels 4 de vapeur d'atomisation dans
le riser **B,** selon certaines technologies souvent employées dans le domaine. L'installation peut éventuellement comprendre des moyens d'injection 2 d'un liquide de refroidissement dans la partie supérieure du riser **B** tel que décrit dans le brevet US 4,818,372 et appelé dans la suite de description liquide MTC.

Selon l'invention l'unité comprend en outre, par exemple après sa modernisation, deux tubes verticaux **C** ou risers secondaires parallèles au riser principal **B,** en position symétrique l'un de l'autre par rapport au riser principal **B.** L'extrémité inférieure de chaque riser secondaire est ouverte sur la partie basse du riser principal et l'extrémité supérieure de chaque riser secondaire est ouverte sur la partie haute du riser principal. La charge secondaire est injectée, éventuellement en mélange avec de la vapeur d'atomisation, par des moyens d'injection 3 dans la partie basse de chacun des risers secondaires.
La liaison inférieure (6) entre le riser principal et les risers secondaires est située en amont du point d'injection 1 de la charge conventionnelle dans le sens de circulation des fluides. Par amont et aval il est fait référence dans la présente description au sens de progression des fluides.

De préférence, les moyens d'injection 3 sont situés à proximité de la liaison inférieure (6) entre les riser principal et secondaires, de façon à augmenter le temps de séjour moyen des réactifs dans le (les) risers.
Selon l'invention, le point d'injection (1) de la charge conventionnelle dans le riser **B** peut être situé en dessous ou de préférence au dessus du point de liaison (7) de la conduite de transfert de catalyseur A et du riser principal B.
Pour optimiser l'écoulement dans les zones réactionnelles principale et secondaire, le point de liaison inférieure (6) entre les deux zones peut être avantageusement positionné en dessous et le plus bas possible par rapport au point d'injection (1) de la charge conventionnelle dans le riser **B.** De préférence, ce point de liaison inférieur (6) est situé au dessus et le plus proche possible du point d'injection (7) du catalyseur dans le riser B, c'est à dire de l'extrémité de la conduite A.
La liaison supérieure entre le riser principal et les risers secondaires est située en amont du point d'injection (2) de liquide MTC.
Selon une variante de l'invention, on peut augmenter le nombre de risers secondaires autour du riser principal. Par exemple le nombre desdits risers peut être compris entre 2 et 10. Avantageusement, les angles entre deux risers secondaires adjacents sont dans ce cas égaux.

La présente invention est avantageusement mise en oeuvre pour le craquage d'une coupe pétrolière dans une zone réactionnelle implantée au sein d'une unité classique de craquage catalytique en lit fluidisé. Selon l'invention, les conditions de craquage dans cette zone réactionnelle secondaire sont différentes et substantiellement indépendantes des conditions de craquage de la charge conventionnelle. Par l'expression "substantiellement indépendantes", il est entendu au sens de la présente description qu'une variation des conditions dans la zone primaire (ou secondaire) n'a pas pour conséquence une variation significative des conditions dans la zone secondaire (ou primaire), bien qu'une influence minime soit bien entendue possible.
Des conditions de craquage substantiellement indépendantes dans les deux zones peuvent par exemple être obtenues grâce à un système de vanne de réglage du débit de catalyseur solide sur le riser secondaire ou par le moyen d'un système d'extraction de calories par injection d'un liquide de refroidissement dans la partie supérieure du riser principal, comme indiqué par la référence 2 sur la figure 1. Une association de ces deux modes de réalisation ou tout autre méthode connue de contrôle des conditions de craquage reposant par exemple sur l'extraction de chaleur des fluides en sortie de riser peuvent également être utilisées selon l'invention.

Dans l'unité classique de FCC, la charge conventionnelle est craquée dans une colonne verticale ou riser au contact de particules de catalyseur solide. L'écoulement est vertical ascendant co-courant, les différentes phases introduites étant entraînées par la vapeur d'atomisation, généralement de la vapeur d'eau, introduite en bas du réacteur et/ou en mélange avec la charge. La charge est introduite sous forme liquide, est chauffée puis généralement mélangée à la vapeur d'eau surchauffée de vaporisation. La charge est vaporisée au contact du catalyseur chaud provenant du régénérateur, et craquée lors de son ascension vers le sommet du riser.
Dans le cadre de l'invention proposée, le fonctionnement et le contrôle de la zone réactionnelle principale ne change pas. Les propriétés de la charge conventionnelle sont standard, c'est à dire que les charges sont identiques à celles habituellement traitées par ce type d'unités.

La charge secondaire se caractérise en général par un pouvoir de cokéfaction, c'est à dire une capacité à induire lors de la réaction de craquage un dépôt de coke sur le catalyseur, plus faible que celui de la charge conventionnelle. En outre les conditions de craquage de la charge secondaire sont le plus souvent plus sévère que celles de la charge conventionnelle. Selon un mode de réalisation possible de l'invention, la charge secondaire a une masse molaire comprise entre 65 g/mol et 285 g/mol et peut être par exemple une coupe C5-C20, voire une masse molaire comprise entre 115 g/mol et 170 g/mol, par exemple une coupe C8-C12.

La charge secondaire est injectée à la base du riser secondaire sous forme liquide, et entre en contact avec une partie du catalyseur chaud provenant du régénérateur et introduit à la base du riser principal. La charge se vaporise et craque. La température dans la zone réactionnelle secondaire peut être comprise entre 540 °C et 660 °C, préférentiellement entre 560 °C et 620 °C. Le rapport du débit de catalyseur / débit de la charge secondaire, généralement désigné dans le domaine par le terme "Cat/Oil ou C/O ratio", est compris entre 2 et 100, préférentiellement entre 4 et 20, plus préférentiellement entre 5 et 15. Selon les techniques connues de l'homme du métier, les dimensions du riser secondaire sont déterminées en fonction des conditions de fonctionnement envisagées (par exemple gamme possible de débit de catalyseur ou intervalle de température possible pour chaque zone) pour que le bilan de la pression dans cette zone crée un effet de gazosiphon générant un apport continu et suffisant de catalyseur dans le riser secondaire. La longueur et le diamètre du riser secondaire sont le plus souvent calculés selon des techniques connues de façon à obtenir un temps de séjour moyen des composés compris entre environ 0,1 et environ 10 secondes, préférentiellement entre environ 0,1 et environ 3 secondes.

Selon l'invention, la température de craquage et le C/O dans la zone réactionnelle secondaire sont naturellement fixés par le bilan thermique de l'unité et peuvent être réglés par exemple grâce aux moyens de refroidissement 2 de l'écoulement au-dessus de la liaison supérieure du riser principal et du riser secondaire et/ou un système de vannes de contrôle du débit de catalyseur sur le riser secondaire (non représenté sur la figure 1) tel que précédemment décrit.

Lorsque le refroidissement de l'écoulement est réalisé par un système d'extraction de calories, on utilise selon l'invention préférentiellement la vaporisation d'un liquide introduit dans cette zone tel que proposé par le brevet US 4,818,372. Dans ce cas, le liquide choisi peut être facilement vaporisé à la température de fonctionnement du réacteur, telle qu'une coupe C6-C8 aromatique. Le rapport de débit du liquide à injecter pour contrôler les conditions de craquage dans la zone réactionnelle secondaire sur le débit de la coupe pétrolière secondaire est le plus souvent compris entre 1/10 et 7/1, préférentiellement entre 1/2 et 5/2. Par exemple, l'utilisation d'un liquide de refroidissement MTC décrit dans le brevet US 4,818,372 permet avantageusement d'augmenter le rapport C/O précédemment décrit..

L'expansion volumique due au craquage de la charge secondaire peut être avantageusement compensée par la forme conique de la base des risers secondaires.

Etant données les propriétés et les conditions de craquage généralement plus sévères de la charge secondaire, le catalyseur en sortie du ou des risers secondaires (C) est peu coké. Ce catalyseur encore très actif est évacué dans le riser principal (B) avec les gaz formés au sein du riser secondaire et mélangé à l'écoulement réactionnel principal, générant ainsi un craquage supplémentaire de la charge conventionnelle.

Selon l'invention, le présent dispositif peut être associé avantageusement à un dispositif de séparation rapide comprenant une pluralité de chambres de séparation et de chambres de circulation (strippage) des fluides ou une pluralité de chambres dédiées successivement à la séparation et au strippage des fluides tel que décrit par exemple dans le brevet US 6,296,812. Un tel dispositif est en effet particulièrement bien adapté pour la séparation ultérieure des particules solides catalytiques et des produits gazeux issus du présent dispositif de craquage catalytique car il permet notamment de diminuer la dégradation thermique des fractions valorisables issue de la réaction telle que les fractions essence ou gazole suite à des réactions de craquage secondaire dans le haut du riser ou le séparateur.

Les exemples qui suivent, non limitatifs, permettent d'illustrer les avantages liés à la mise en oeuvre de la présente invention.

### EXEMPLE 1:

Cet exemple illustre un cas de référence correspondant à une unité de FCC conventionnelle sans implantation de zone réactionnelle secondaire. La charge secondaire est injectée en mélange avec la charge principale.

L'unité FCC considérée est équipée d'un unique étage de régénération, les conditions de craquage sont décrites dans le tableau 1.

**Tableau 1 : Conditions de fonctionnement de l'unité FCC**

| **Grandeurs** | **Unité** | **Valeurs** |
|---|---|---|
| Température de craquage | °C | 525 |
| Débit de charge | t/h | 176 |
| Débit de catalyseur | t/h | 1077 |
| C/O | - | 6,12 |
| Température régénérateur | °C | 701 |
| Débit d'air au régénérateur | t/h | 108 |
| Débit de liquide de refroidissement | % | 0 |

Le catalyseur utilisé est un catalyseur à base de zéolithe Y de type Faujasite comprenant 5% en poids de zéolithe ZSM 5.

La charge conventionnelle est une coupe pétrolière lourde, la charge secondaire est une coupe essence lourde C8-C12, le liquide de refroidissement du réacteur est une essence lourde de densité supérieure. Leurs propriétés sont données dans le tableau 2.

**Tableau 2 : Propriété des charges et liquide de refroidissement**

| | **Unité** | **Charge conventionnelle** | **Charge secondaire** | **MTC** |
|---|---|---|---|---|
| Densité 15°C | kg/dm³ | 0,909 | 0,736 | 0,800 |
| T TBP 50 % (← à préciser) | °C | 459 | 96 | 150 |
| Masse molaire | g/mol | 433 | 127 | 297 |

### EXEMPLE 2:

Cet exemple met en oeuvre une unité de FCC comprenant une zone réactionnelle secondaire selon l'invention conforme à celle décrite précédemment en relation avec la figure 1. La charge secondaire est injectée cette fois dans le riser secondaire. Le catalyseur employé, les charges et le liquide de refroidissement sont les mêmes que ceux de l'exemple 1.

### EXEMPLE 3 :

L'impact de la présence de la zone réactionnelle secondaire sur la structure de rendement du craquage de la charge conventionnelle a été étudié par comparaison entre les résultats obtenus pour les dispositifs selon les exemples 1 et 2.

Les paramètres maintenus constants au cours cette étude sont :
1. Le débit de la coupe pétrolière conventionnelle.
2. La température de craquage de la charge conventionnelle, fixée à 525 °C : les conditions de craquage dans la zone haute du riser conventionnel restent constantes.
3. La température du liquide inerte de refroidissement de l'écoulement, fixée à 330 °C.
4. La température de mélange en amont de l'injection du liquide de refroidissement de l'écoulement : les conditions de vaporisation de la charge conventionnelle restent constantes.

Les paramètres qui varient et permettent la constance des paramètres précédents sont :
1. Le débit total de catalyseur.
2. La fraction du débit total de catalyseur traversant chaque zone réactionnelle.
3. Le débit du liquide de refroidissement.

Les conditions relatives au craquage de la charge secondaire sont les suivantes : le débit de la coupe pétrolière secondaire est égal à 6 % du débit de la coupe pétrolière conventionnelle dans les exemples 1 et 2. La température de craquage de la coupe pétrolière secondaire est égale à 600 °C dans le riser secondaire.

Le tableau 3 qui suit résume les conditions opératoires et les structures de rendement du craquage de la charge conventionnelle pour les deux cas.

On observe une augmentation sensible de la conversion globale des charges. D'autre part, la production de propylène augmente de 33 % lorsque la présente invention est mise en ouvre par rapport au cas de référence. Par ailleurs, la conversion des produits les plus lourds difficilement valorisables ensuite (slurry, LCO), augmente sensiblement selon l'invention. Dans le même temps, la production en produits intermédiaires à forte valeur ajoutée (essences) n'est que faiblement pénalisée et l'on observe une augmentation conjointe de production de LPG valorisable et de gaz secs. Ces phénomènes peuvent s'expliquer par l'augmentation des réactions de craquage secondaire tel que cela a été précédemment décrit. L'utilisation d'un dispositif ou séparateur rapide en sortie du riser, par exemple tel que décrit dans le brevet US 6,296,812, pourrait permettre avantageusement de maintenir la production en essence et de diminuer la production en gaz secs et en coke.

| **Paramètre** | **Unité** | **Exemple 1** | **Exemple 2** |
|---|---|---|---|
| Température de mélange en amont de | °C | 529 | 529 |
| l'injection du liquide de refroidissement | | | |
| Température de craquage conventionnel | °C | 525 | 525 |
| Température de craquage secondaire | °C | 525 | 600 |
| Débit de charge conventionnelle | t/h | 176 | 176 |
| Débit de charge secondaire | (% débit charge | 6 | 6 |
| | principale) | | |
| Débit de catalyseur conventionnel | t/h | 1077 | 947 |
| Débit de catalyseur secondaire | t/h | - | 140 |
| Débit de catalyseur total | t/h | 1077 | 1087 |
| C/O conventionnel en zone de vaporisation | - | 6,12 | 5,38 |
| C/O conventionnel en zone haute de riser | - | 6,12 | 5,82 |
| C/O secondaire | - | - | 13,20 |
| Température régénérateur | °C | 701 | 724 |
| Débit d'air au régénérateur | t/h | 108 | 125 |
| Débit de liquide de refroidissement | % | 0 | 10,40 |

| **Rendement sortie riser** | **Unité** | **Exemple 1** | **Exemple 2** |
|---|---|---|---|
| Conversion | % | 75,43 | 77,24 |
| Gaz Secs (H-C1-C2) | % massique | 2,77 | 3,20 |
| LPG (C3-C4) | % massique | 15,42 | 18,59 |
| Essence légère (C5-160*) | % massique | 42,50 | 40,50 |
| Essence Lourde (160-220) | % massique | 10,15 | 9,57 |
| LCO (220*-360) | % massique | 14,87 | 13,91 |
| Slurry (360+**) | % massique | 9,70 | 8,85 |
| Coke | % massique | 4,50 | 5,19 |
| C3= | % massique | 4,22 | 5,62 |

| | | | |
|---|---|---|---|
| * hydrocarbures dont la température d'ébullition est inférieure ou égale à 160°C | | | |
| ** hydrocarbures dont la température d'ébullition est supérieure à 360°C | | | |

## Revendications

1. Dispositif pour le craquage catalytique d'une charge conventionnelle et d'une charge secondaire comprenant
- un riser principal (**B**) délimitant une zone réactionnelle conventionnelle,
- une conduite de transfert (**A**) vers le riser principal (**B**) amenant du catalyseur frais ou issu d'une unité de régénération,
- des moyens d'injection (1) de la charge conventionnelle dans le riser principal (B),
- des moyens d'injection d'une vapeur d'atomisation dans le riser principal (**B**),
ledit dispositif étant **caractérisé en ce qu'**il comprend en outre
- au moins deux risers secondaires (**C**) parallèles au riser principal (B), les angles entre deux risers secondaires adjacents par rapport au riser principal étant sensiblement égaux, l'extrémité inférieure de chaque riser secondaire est ouverte sur la partie basse du riser principal (**B**) et l'extrémité supérieure de chaque riser secondaire est ouverte sur la partie haute du riser principal (**B**), ou bien entre 2 et 10 de tels risers secondaires, ces riser(s) secondaire(s) étant disposé(s) autour du riser principal (**B**) et délimitant une zone réactionnelle secondaire pour le craquage de la charge secondaire,
- des moyens d'injection (3) d'une charge secondaire dans le ou lesdits risers secondaires (**C**)
- des moyens de contrôle des conditions de craquage de la charge secondaire.

2. Dispositif selon la revendication 1 dans lequel les moyens de contrôle des conditions de craquage de la charge secondaire comprennent des moyens d'injection (2) d'un liquide de refroidissement dans la partie supérieure du riser principal (**B**).

3. Dispositif selon l'une des revendications précédentes dans lequel le ou les points de liaison (6) entre les zones rédactionnelles conventionnelle et secondaires sont positionnés en dessous du point d'injection (1) de la charge conventionnelle dans le riser **B**.

4. Dispositif selon l'une des revendications précédentes dans lequel le point d'injection (1 ) de la charge conventionnelle dans le riser **B** peut être situé en dessous ou de préférence au dessus du point de liaison (7) de la conduite de transfert de catalyseur A et du riser principal B.

5. Dispositif selon l'une des revendications précédentes dans lequel le ou les points de liaison entre les zones réactionnelles conventionnelle et secondaires sont situés au
dessus et à proximité du point d'injection (7) du catalyseur dans le riser B, c'est à dire de l'extrémité de la conduite A.

6. Dispositif selon l'une des revendications précédentes dans lequel les moyens de contrôle des conditions du craquage secondaire comprennent en outre au moins une vanne de réglage du débit de catalyseur solide sur le riser secondaire.

7. Procédé de craquage catalytique d'une charge conventionnelle et d'une charge secondaire mettant en oeuvre le dispositif selon l'une des revendications précédentes.

8. Procédé selon la revendication 7 dans lequel les conditions de craquage dans la zone réactionnelle secondaire et/ou dans la zone réactionnelle conventionnelle sont réglées au moins en partie par la vaporisation d'une quantité variable de liquide de refroidissement injectée par des moyens d'injection (2) dudit liquide dans la partie supérieure du riser principal (B).

9. Procédé selon l'une des revendications 7 ou 8 dans lequel la longueur et le diamètre du riser secondaire sont choisis de façon à obtenir un temps de séjour moyen des composés compris entre environ 0,1 et environ 10 secondes.

10. Procédé selon l'une des revendications 7 à 9 dans lequel la température de la zone réactionnelle secondaire est comprise entre 560 et 620°C et dans lequel le rapport C/O du débit de catalyseur sur le débit de la charge secondaire est compris entre environ 2 et environ 100.

11. Procédé selon l'une des revendications 7 à 10 dans lequel la charge conventionnelle comprend des distillats et/ou des résidus hydrotraités comme les résidus de distillation atmosphérique ou de distillation sous vide les résidus de viscoréduction de distillation.

12. Procédé selon l'une des revendications 7 à 11 dans lequel la charge secondaire comprend une charge d'hydrocarbures dont la masse molaire est comprise entre 65 g/mol et 285 g/mol.

13. Procédé selon l'une des revendications 7 à 12 dans lequel un catalyseur comprenant une zéolithe Y de type Faujasite et 2 à 10 % poids d'une zéolithe ZSM 5 est mise en oeuvre pour le craquage de la charge conventionnelle et/ou pour le craquage de la charge secondaire.

14. Procédé selon l'une des revendications 7 à 13 dans lequel un dispositif de séparation rapide comprenant une pluralité de chambres de séparation et de chambres de circulation ou strippage des fluides ou une pluralité de chambres dédiées successivement à la séparation et au strippage des fluides est utilisé pour la séparation des particules solides catalytiques et des produits gazeux issus de la réaction de craquage.

## Claims

1. An apparatus for catalytically cracking a conventional feed and a secondary feed comprising
• a principal riser (B) defining a conventional reaction zone;
• a transfer line (A) for the principal riser (B) supplying fresh catalyst or catalyst from a regeneration unit;
• means (1) for injecting conventional feed into the principal riser (B);
• means for injecting atomization vapour into the principal riser (B);
said apparatus further comprising:
• one secondary riser (C) parallel to the principal riser (B), the lower end of which is open to the bottom portion of the principal riser (B) and the upper end of which is open to the top portion of the principal riser (B), or 2 to 10 of said secondary risers, said secondary riser(s) being disposed around the principal riser (B) and defining a secondary reaction zone for cracking of a secondary feed; and
• means (3) for injecting a secondary feed into the secondary riser or risers (C);
• means for controlling the cracking conditions for the secondary feed.

2. An apparatus according to claim 1, in which the means for controlling the cracking conditions for the secondary feed comprise means (2) for injecting a cooling liquid into the upper portion of the principal riser (B).

3. An apparatus according to one of the preceding claims, in which the connection point or points (6) between the conventional and secondary reaction zones are positioned below the point (1) for injecting conventional feed into the riser B.

4. An apparatus according to one of the preceding claims, in which the point (1) for injecting conventional feed into the riser (B) may be located below or, as is preferable, above the point (7) for connecting the catalyst transfer line (A) and the principal riser (B).

5. An apparatus according to one of the preceding claims, in which the connection point or points between the conventional and secondary reaction zones are located above and close to the point (7) for injecting catalyst into the riser (B), i.e. at the end of the line (A).

6. An apparatus according to one of the preceding claims, in which the means for controlling the secondary cracking conditions further comprise at least one valve for adjusting the flow rate of solid catalyst to the secondary riser.

7. A process for catalytic cracking of a conventional feed and a secondary feed using the apparatus according to one of the preceding claims.

8. A process according to claim 7, in which the cracking conditions in the secondary reaction zone and/or in the conventional reaction zone are adjusted at least in part by vaporizing a variable quantity of cooling liquid injected via means (2) for injecting said liquid into the upper portion of the principal riser (B).

9. A process according to claim 7 or claim 8, in which the length and diameter of the secondary riser are selected so that the mean residence time for compounds is in the range from about 0.1 to about 10 seconds.

10. A process according to one of claims 7 to 9, in which the temperature of the secondary reaction zone is in the range 560°C to 620°C and the ratio C/O of the flow rate of catalyst over the flow rate of secondary feed is in the range from about 2 to about 100.

11. A process according to one of claims 7 to 10, in which the conventional feed comprises distillates and/or hydrotreated residues such as atmospheric distillation residues or vacuum distillation residues, or visbreaking or distillation residues.

12. A process according to one of claims 7 to 11, in which the secondary feed comprises a hydrocarbon feed with a molar mass in the range 65 g/mol to 285 g/mol.

13. A process according to one of claims 7 to 12, in which a catalyst comprising a faujasite type Y zeolite and 2% to 10% by weight of a ZSM-5 zeolite is used to crack the conventional feed and/or to crack the secondary feed.

14. A process according to one of claims 7 to 13, in which a rapid separation device comprising a plurality of separation chambers and fluid circulation or stripping chambers or a plurality of chambers dedicated in succession to separating and stripping fluids is used to separate solid catalytic particles and gaseous products from the cracking reaction.

## Patentansprüche

1. Vorrichtung zum katalytischen Cracken einer herkömmlichen Charge und einer Sekundärcharge, welche umfasst:
- einen Haupt-Riser (B), der eine herkömmliche Reaktionszone begrenzt,
- eine Transferleitung (A) zum Haupt-Riser (B), die frischen oder von einer Regenerationseinheit stammenden Katalysator zuführt,
- Mittel zum Einspritzen (1) der herkömmlichen Charge in den Haupt-Riser (B),
- Mittel zum Einspritzen eines Zerstäubungsdampfes in den Haupt-Riser (B),
wobei die Vorrichtung **dadurch gekennzeichnet ist, dass** sie außerdem umfasst:
- mindestens zwei sekundäre Riser (C), die zu dem Haupt-Riser (B) parallel sind, wobei die Winkel zwischen zwei benachbarten sekundären Risern in Bezug auf den Haupt-Riser im Wesentlichen gleich sind, das untere Ende jedes sekundären Risers zum unteren Teil des Haupt-Risers (B) hin offen ist und das obere Ende jedes sekundären Risers zum oberen Teil des Haupt-Risers (B) hin offen ist, oder auch zwischen zwei und 10 derartige sekundäre Riser, wobei diese sekundären Riser um den Haupt-Riser (B) herum angeordnet sind und eine sekundäre Reaktionszone zum Cracken der Sekundärcharge begrenzen,
- Mittel zum Einspritzen (3) einer Sekundärcharge in den oder die sekundären Riser (C),
- Mittel zur Steuerung der Bedingungen des Crackens der Sekundärcharge.

2. Vorrichtung nach Anspruch 1, wobei die Mittel zur Steuerung der Bedingungen des Crackens der Sekundärcharge Mittel zum Einspritzen (2) einer Kühlflüssigkeit in den oberen Teil des Haupt-Risers (B) umfassen.

3. Vorrichtung nach einem der vorhergehenden Ansprüche, wobei der oder die Verbindungspunkt(e) (6) zwischen der herkömmlichen Reaktionszone und den sekundären Reaktionszonen unterhalb des Punktes der Einspritzung (1) der herkömmlichen Charge in den Riser (B) angeordnet ist (sind).

4. Vorrichtung nach einem der vorhergehenden Ansprüche, wobei sich der Punkt der Einspritzung (1) der herkömmlichen Charge in den Riser (B) unterhalb oder vorzugsweise oberhalb des Verbindungspunktes (7) der Katalysator-Transferleitung (A) und des Haupt-Risers (B) befinden kann.

5. Vorrichtung nach einem der vorhergehenden Ansprüche, wobei sich der oder die Verbindungspunkt(e) zwischen der herkömmlichen Reaktionszone und den sekundären Reaktionszonen oberhalb und in der Nähe des Punktes der Einspritzung (7) des Katalysators in den Riser (B), das heißt des Endes der Leitung (A) befindet (befinden).

6. Vorrichtung nach einem der vorhergehenden Ansprüche, wobei die Mittel zur Steuerung der Bedingungen des sekundären Crackens außerdem mindestens ein Ventil zur Regelung des Durchsatzes von festem Katalysator an dem sekundären Riser umfassen.

7. Verfahren zum katalytischen Cracken einer herkömmlichen Charge und einer Sekundärcharge unter Verwendung der Vorrichtung nach einem der vorhergehenden Ansprüche.

8. Verfahren nach Anspruch 7, wobei die Bedingungen des Crackens in der sekundären Reaktionszone und/oder in der herkömmlichen Reaktionszone mindestens teilweise durch die Verdampfung einer variablen Menge an Kühlflüssigkeit geregelt werden, die durch Mittel zum Einspritzen (2) dieser Flüssigkeit in den oberen Teil des Haupt-Risers (B) eingespritzt wird.

9. Verfahren nach Anspruch 7 oder 8, wobei die Länge und der Durchmesser des sekundären Risers derart gewählt werden, dass eine mittlere Verweildauer der Verbindungen erzielt wird, die zwischen etwa 0,1 und etwa 10 Sekunden liegt.

10. Verfahren nach einem der Ansprüche 7 bis 9, wobei die Temperatur der sekundären Reaktionszone zwischen 560 und 620 °C liegt und wobei das Verhältnis C/O des Katalysatordurchsatzes zum Durchsatz der Sekundärcharge zwischen etwa 2 und etwa 100 liegt.

11. Verfahren nach einem der Ansprüche 7 bis 10, wobei die herkömmliche Charge hydrobehandelte Destillate und/oder Rückstände umfasst, wie die Rückstände von atmosphärischer Destillation oder von Vakuumdestillation, die Visbreaker-Rückstände einer Destillation.

12. Verfahren nach einem der Ansprüche 7 bis 11, wobei die Sekundärcharge eine Charge von Kohlenwasserstoffen umfasst, deren molare Masse zwischen 65 g/mol und 285 g/mol liegt.

13. Verfahren nach einem der Ansprüche 7 bis 12, wobei ein Katalysator, der ein Zeolith Y vom Typ Faujasit und 2 bis 10 Gew.-% eines Zeoliths ZSM-5 umfasst, zum Cracken der herkömmlichen Charge und/oder zum Cracken der Sekundärcharge eingesetzt wird.

14. Verfahren nach einem der Ansprüche 7 bis 13, wobei eine Vorrichtung zum schnellen Trennen, die mehrere Trennkammern und Kammern zur Zirkulation oder zum Strippen der Fluide oder mehrere Kammern, die nacheinander zum Trennen und zum Strippen der Fluide bestimmt sind, umfasst, zur Trennung der katalytischen festen Teilchen und der von der Crackreaktion stammenden gasförmigen Produkte verwendet wird.
